(19) Europäisches Patentamt
European Patent Office
Office européen des brevets

(11) EP 3 549 784 B1

(12) EUROPEAN PATENT SPECIFICATION

(45) Date of publication and mention of the grant of the patent:
**09.12.2020 Bulletin 2020/50**

(21) Application number: **19163090.4**

(22) Date of filing: **15.03.2019**

(51) Int Cl.:
***B60C 1/00*** (2006.01) ***C08L 7/00*** (2006.01)
***C08L 9/00*** (2006.01) ***C08L 9/06*** (2006.01)
***C08K 3/04*** (2006.01)

# (54) RUBBER COMPOSITION FOR TREAD AND TIRE

KAUTSCHUKZUSAMMENSETZUNG FÜR LAUFFLÄCHE UND REIFEN

COMPOSITION DE CAOUTCHOUC POUR BANDE DE ROULEMENT ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2018 JP 2018070793**

(43) Date of publication of application:
**09.10.2019 Bulletin 2019/41**

(73) Proprietor: **Sumitomo Rubber Industries Ltd.**
**Kobe-shi, Hyogo 651-0072 (JP)**

(72) Inventor: **MIKI, Naoyuki**
**Chuo-ku, Kobe-shi,, Hyogo 651-0072 (JP)**

(74) Representative: **TBK**
**Bavariaring 4-6**
**80336 München (DE)**

(56) References cited:
**EP-A1- 2 730 433 EP-A2- 1 213 323**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 549 784 B1

## Description

TECHNICAL FIELD

The present invention relates to a rubber composition for a tread and a tire having a tread composed of the rubber composition.

BACKGROUND OF THE INVENTION

In a tread rubber of a truck tire running on a rough road, since a defect generated on a tread becomes large and a small chipping (chip cut) and the like occurs, it is necessary to secure durability against the chip cut. Thus a natural rubber and a styrene-butadiene rubber having excellent chipping resistance are used as a rubber component for a tread rubber and reinforcing agents such as carbon black and silica having high reinforceability are compounded.

Meanwhile, abrasion resistance is also demanded as durability of a tire, and in the case of all-season tires used mainly on a smooth road, enhancement of abrasion resistance is aimed by compounding a butadiene rubber. However, if a butadiene rubber is compounded in a rubber for a tread, there is a tendency of enhancing abrasion resistance, but chipping resistance is worsened, and thus there is a problem that compatibility of the both characteristics is difficult.

JP 2014-024890 A describes a rubber composition for a tread, in which abrasion resistance and block crack resistance are improved by allowing the rubber composition to comprise crystallized carbon black. However, there is a room for improvement in compatibility between the both characteristics.

EP 2 730 433 A1 relates to a rubber composition for a tread, comprising: a rubber component; a specific amount of a carbon black having a predetermined nitrogen adsorption specific surface area; a specific amount of sulfur; and a specific amount of a compound represented by formula (I) below, the rubber component comprising specific amounts of an isoprene-based rubber and a high-cis butadiene rubber having a predetermined cis content

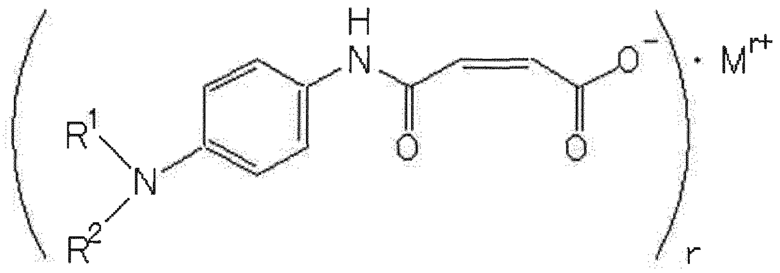

(I)

.

SUMMARY OF THE INVENTION

An object of the present invention is to provide a rubber composition for a tread having a good abrasion resistance, particularly abrasion resistance for running on a rough road surface (unpaved rough road surface) and a tire having a tread composed of the rubber composition.

As a result of intensive studies, the inventor of the present invention has found that a rubber composition for a tread comprising predetermined amounts of an isoprene rubber, a butadiene rubber and a styrene-butadiene rubber and carbon black having a predetermined nitrogen adsorption specific surface area has a good abrasion resistance. Further, the inventor has found that in a preferred embodiment, chipping resistance of a rubber composition for a tread is enhanced, and has completed the present invention.

Namely, the present invention relates to:

[1] a rubber composition for a tread comprising 10 to 70 parts by mass of carbon black having a nitrogen adsorption specific surface area of 130 $m^2/g$ or more based on 100 parts by mass of a rubber component comprising 50 to 70% by mass of an isoprene rubber, 10 to 30% by mass of a butadiene rubber and 22 to 40% by mass of a styrene-butadiene rubber,

[2] the rubber composition for a tread of the above [1], having 70°CE* of 6.2 or more,

[3] the rubber composition for a tread of the above [1] or [2], having 70°Ctan$\delta$ of 0.13 or less,

[4] the rubber composition for a tread of any of the above [1] to [3], wherein a silica content is not less than 0 part by mass and not more than 10 parts by mass,

[5] the rubber composition for a tread of any of the above [1] to [4], wherein a styrene content of the styrene-butadiene rubber is from 5 to 15% by mass, a vinyl content thereof is from 30 to 45 mol%, and a weight-average molecular weight thereof is not less than 200000, and

[6] the rubber composition for a tread of any of the above [1] to [5], wherein a cis content of the butadiene rubber is not less than 90% and a weight-average molecular weight thereof is not less than 400000, and
[7] a tire having a tread composed of the rubber composition for a tread of any of the above [1] to [6].

According to the configuration of the above [1], the rubber composition comprises a styrene-butadiene rubber (SBR), and thereby fine particle carbon which is difficult to disperse in a butadiene rubber (BR) is dispersed satisfactorily, a reinforcing effect by carbon black is exhibited and abrasion resistance when running on a rough road is enhanced.
According to the configuration of the above [2], deformation due to an external foreign matter such as a stone on a rough road is small and a defect is hardly generated, which is advantageous from the viewpoint of abrasion due to chipping.
According to the configuration of the above [3], deterioration of abrasion resistance can be inhibited due to softening of a tread due to heat generation.
According to the configuration of the above [4], since a compounding amount of silica is small, a silica aggregate which becomes a starting point of breakage decreases, and abrasion resistance when running on a rough road is enhanced.
According to the configuration of the above [5], compatibility between the SBR and the BR is enhanced and carbon black existing in an SBR phase is also distributed to a BR phase. Therefore, a rubber strength of the BR phase is increased, and abrasion resistance when running on a rough road is enhanced.
According to the configuration of the above [6], since a larger cis content of the BR allows a polymer chain to be arranged regularly, an interaction between the polymers becomes strong and a rubber strength is increased. Therefore, abrasion resistance when running on a rough road is enhanced.
According to the configuration of the above [7], a tire being good in abrasion resistance when running on a rough road can be manufactured.
The tire having a tread composed of the rubber composition of the present invention is good in abrasion resistance, particularly abrasion resistance for running on a rough road.

DETAILED DESCRIPTION

The rubber composition for a tread of one embodiment of the present invention is characterized by comprising an isoprene rubber, a butadiene rubber (BR), a styrene-butadiene rubber (SBR) and carbon black having a predetermined nitrogen adsorption specific surface area. Specifically the rubber composition is a rubber composition for a tread comprising 10 to 70 parts by mass of carbon black having a nitrogen adsorption specific surface area of 130 $m^2/g$ or more based on 100 parts by mass of a rubber component comprising 50 to 70% by mass of an isoprene rubber, 10 to 30% by mass of a butadiene rubber and 22 to 40% by mass of a styrene-butadiene rubber. Herein, when a numerical range is shown using "to", it includes numerical values at both sides thereof.
In the rubber composition for a tread of one embodiment of the present invention, by dispersing a styrene butadiene rubber (SBR) in an isoprene/butadiene polymer, an impact generated when running on a rough road is relaxed. When the rubber composition comprises a predetermined amount of small particle size carbon black having a nitrogen adsorption specific surface area of 130 $m^2/g$ or more, the small particle size carbon black is dispersed in the neighborhood of a boundary of each phase of the isoprene rubber, the BR and the SBR, and a contact area of the SBR with carbon black increases. Thus, bonding between the respective phases of the isoprene rubber, the BR and the SBR is made strong, thereby making it possible to obtain a rubber composition being capable of effectively absorbing an impact generated when running on a rough road. Further, it can be considered that by use of the small particle size carbon black, a reinforcing effect on the rubber composition is enhanced and abrasion resistance and chipping resistance are enhanced

<Rubber component>

Examples of a rubber component suitably used in one embodiment of the present invention include a styrene butadiene rubber (SBR), an isoprene rubber and a butadiene rubber (BR).

(Isoprene rubber)

Examples of the usable isoprene rubber include those usually used in a tire industry, for example, an isoprene rubber (IR), a natural rubber and the like. Examples of the natural rubber include modified natural rubbers such as an epoxidized natural rubber (ENR), a hydrogenated natural rubber (HNR), a deproteinized natural rubber (DPNR), an ultra pure natural rubber (UPNR) and a grafted natural rubber besides an un-modified natural rubber (NR). These rubbers may be used alone, or may be used in combination of two or more thereof.

NR is not limited particularly, and those which are commonly used in a tire industry can be used. For example, there are SIR20, RSS#3, TSR20 and the like.

A content of the isoprene rubber in the rubber component is not less than 50% by mass, preferably not less than 52% by mass, more preferably not less than 55% by mass. When the content is less than 50% by mass, there is a tendency that an effect of the present invention becomes insufficient. On the other hand, the content of the isoprene rubber is not more than 70% by mass, preferably not more than 68% by mass, more preferably not more than 65% by mass. When the content exceeds 70% by mass, crack growth resistance tends to decrease.

(BR)

BR is not limited particularly, and examples of usable BRs include BRs usually used in a tire industry, for example, a BR having a content of cis-1,4 bond of less than 50% (low cis BR), a BR having a content of cis-1,4 bond of not less than 90% (high cis BR), a rare-earth butadiene rubber (rare-earth BR) synthesized using a rare-earth element catalyst, a BR comprising syndiotactic polybutadiene crystals (SPB-containing BR), a modified BR (high cis modified BR, low cis modified BR) and the like. Among these BRs, a high cis BR is preferable for the reason that abrasion resistance is good.

Examples of the high-cis BRs include BR1220 available from ZEON CORPORATION, BR130B, BR150B and BR150L available from Ube Industries, Ltd., BR730 available from JSR Corporation and the like. When the rubber component comprises a high cis BR, low temperature characteristics and abrasion resistance can be enhanced. Examples of the rare-earth BRs include BUNA-CB25 manufactured by Lanxess K.K. and the like.

An example of the SPB-containing BR is not one in which 1,2-syndiotactic polybutadiene crystals are simply dispersed in the BR, but one in which 1,2-syndiotactic polybutadiene crystals are chemically bonded with the BR and dispersed therein. Examples of such SPB-containing BR include VCR-303, VCR-412 and VCR-617 manufactured by Ube Industries, Ltd. and the like.

Examples of a modified BR include a modified BR (tin modified BR) obtained by performing polymerization of 1,3-butadiene with a lithium initiator and then adding a tin compound, and further having the molecular terminals bonded with a tin-carbon bond, a butadiene rubber (modified BR for silica) having an alkoxysilane condensate compound in an active terminal thereof and the like. Examples of such modified BRs include BR1250H (tin-modified) manufactured by ZEON CORPORATION, S-modified polymer (modified for silica) manufactured by Sumitomo Chemical Industry Company Limited and the like.

A content of the BR in the rubber component is not less than 10% by mass, preferably not less than 12% by mass, more preferably not less than 14% by mass. When the content is less than 10% by mass, there is a tendency that an effect of the present invention becomes insufficient. On the other hand, the content of the BR is not more than 30% by mass, preferably not more than 25% by mass, more preferably not more than 18% by mass. When the content exceeds 30% by mass, there is a tendency that chipping resistance is decreased and block cracks is easily generated.

The cis 1,4-bond content (cis content) in the BR is preferably 90% or more, more preferably 93% or more, still more preferably 95% or more, from the viewpoint of durability and abrasion resistance. It can be considered that since in the case of a larger cis content, a polymer chain is arranged regularly, an interaction between the polymers becomes strong, a rubber strength is enhanced and abrasion resistance when running on a rough road is increased.

A weight-average molecular weight (Mw) of the BR is preferably not less than 400,000, more preferably not less than 450,000, further preferably not less than 500,000 from the viewpoint of abrasion resistance and grip performance. On the other hand, the weight-average molecular weight is preferably not more than 2,000,000, more preferably not more than 1,000,000 from the viewpoint of crosslinking uniformity. It is noted that the weight-average molecular weight of the BR can be calibrated with standard polystyrene based on measurement values determined with gel permeation chromatography (GPC) (GPC-8000 series manufactured by Tosoh Corporation; detector: differential refractometer; column: TSKGEL SUPERMALTPORE HZ-M manufactured by Tosoh Corporation).

(SBR)

The SBR is not particularly limited. Examples of the SBR include a solution-polymerized SBR (S-SBR), an emulsion-polymerized SBR (E-SBR), a modified SBR thereof (modified S-SBR, modified E-SBR) and the like. Examples of the modified SBR include an end-modified and/or main-chain-modified SBR, a modified SBR coupled with a tin or silicon compound or the like (such as a condensate, one having a branch structure, etc.) and the like. Among these, S-SBR is preferable.

Examples of S-SBR usable in one embodiment of the present invention include S-SBRs manufactured by JSR Corporation, Sumitomo Chemical Company, Limited, Ube Industries, Ltd., Asahi Kasei Corporation, ZEON CORPORATION, etc.

A styrene content of the SBR is preferably not less than 5% by mass, more preferably not less than 7% by

mass, further preferably not less than 10% by mass, for the reason that an effect of the present invention can be obtained sufficiently. Further, the styrene content is preferably not more than 15% by mass, more preferably not more than 13% by mass. When the styrene content exceeds 15% by mass, there is a tendency that heat generation is increased. It is noted that the styrene content of the SBR as used herein is calculated in accordance with $^1$H-NMR measurement.

A vinyl content of the SBR is preferably not less than 30 mol%, more preferably not less than 33 mol%, further preferably not less than 35 mol%. When the vinyl content is less than 30 mol%, wet grip performance tends to decrease. On the other hand, the vinyl content of the SBR is preferably not more than 45 mol%, more preferably not more than 42 mol%, further preferably not more than 40 mol%. When the vinyl content exceeds 45 mol%, there is a tendency that heat generation is increased. It is noted that the vinyl content of the SBR as used herein means an amount of 1,2-bond butadiene unit in the SBR, and is determined by an infrared absorption spectrum analysis method.

A weight-average molecular weight (Mw) of the SBR is preferably not less than 200,000, more preferably not less than 300,000, further preferably not less than 400,000, particularly preferably not less than 500,000 from the viewpoint of abrasion resistance and grip performance. On the other hand, the Mw is preferably not more than 2,000,000, more preferably not more than 1,000,000 from the viewpoint of crosslinking uniformity. It is noted that the Mw can be calibrated with standard polystyrene based on measurement values determined with gel permeation chromatography (GPC) (GPC-8000 series manufactured by Tosoh Corporation; detector: differential refractometer; column: TSKGEL SUPERMALTPORE HZ-M manufactured by Tosoh Corporation).

A content of the SBR in the rubber component is not less than 22% by mass, preferably not less than 25% by mass. When the content of the SBR is less than 20% by mass, there is a tendency that an effect of the present invention becomes insufficient. On the other hand, the SBR content is not more than 40% by mass, preferably not more than 37% by mass, more preferably not more than 35% by mass. When the SBR content exceeds 40% by mass, there is a tendency that heat generation is increased.

(Other rubber components)

In one embodiment of the present invention, rubber components other than the SBR, isoprene rubber and BR can be used. Crosslinkable rubber components usually used in a rubber industry can be used as the other rubber components. Examples thereof include a styrene-isoprene-butadiene copolymer (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluorine-containing rubber (FKM), an acrylic rubber (ACM), a hydrin rubber and the like. These other rubber components may be used alone, or may be used in combination of two or more thereof.

In one embodiment of the present invention, a complex elastic modulus (70°CE*) at 70°C of the rubber composition for a tread under the conditions of an initial strain of 10%, a dynamic strain of 2% and a frequency of 10 Hz is preferably 6.2 MPa or more, more preferably 7.0 MPa or more, further preferably 7.5 MPa or more, particularly preferably 8.0 MPa or more from the viewpoint of abrasion resistance and chipping resistance.

In one embodiment of the present invention, a tanδ (70°Ctan8) at 70°C of the rubber composition for a tread under the conditions of an initial strain of 10%, a dynamic strain of 2% and a frequency of 10 Hz is preferably 0.13 or lower, more preferably 0.11 or lower, further preferably 0.09 or lower. When the tanδ exceeds 0.13, abrasion resistance tends to deteriorate by softening of a tread due to heat generation.

<Carbon black>

The rubber composition for a tread according to one embodiment of the present invention is characterized by comprising a predetermined amount of small particle size carbon black having a nitrogen adsorption specific surface area of 130 $m^2/g$ or more. By dispersing small particle size carbon black in the neighborhood of a boundary of each phase of the isoprene rubber, the BR and the SBR to increase contact of the SBR with carbon black, bonding between the respective phases is made strong, thereby making it possible to obtain a rubber composition being capable of effectively absorbing an impact generated when running on a rough road. Further, it can be considered that by use of small particle size carbon black, a reinforcing effect on the rubber composition is enhanced and abrasion resistance and chipping resistance are enhanced.

A nitrogen adsorption specific surface area ($N_2SA$) of the small particle size carbon black is 130 $m^2/g$ or more, preferably 135 $m^2/g$ or more, more preferably 140 $m^2/g$ or more. When the nitrogen adsorption specific surface area is less than 130 $m^2/g$, abrasion resistance tends to become insufficient. Further an upper limit of the nitrogen adsorption specific surface area is not limited particularly, and is preferably 180 $m^2/g$ or less, more preferably 160 $m^2/g$ or less, further preferably 150 $m^2/g$ or less from the viewpoint of processability. The nitrogen adsorption specific surface area can be measured according to JIS K 6217-2 "Carbon black for rubber industry - Fundamental characteristics - Part 2: Determination of specific surface area - Nitrogen adsorption methods - Single-point procedures".

A content of the small particle size carbon black is not less than 10 parts by mass, preferably not less than 20 parts by mass, more preferably not less than 30 parts by mass, further preferably not less than 35 parts by mass based on 100 parts by mass of the rubber component. When the content is less than 10 parts by mass, there is a tendency that abrasion resistance becomes insufficient. On the other hand, the content of the small particle size carbon black is not more than 70 parts by mass, preferably not more than 65 parts by mass, more preferably not more than 60 parts by mass. When the content exceeds 70 parts by mass, there is a tendency that heat generation is liable to arise.

It is preferable that the rubber composition for a tread according to one embodiment of the present invention does not comprise carbon black having a nitrogen adsorption specific surface area ($N_2SA$) of less than 130 $m^2/g$. When the rubber composition comprises carbon black having a nitrogen adsorption specific surface area of less than 130 $m^2/g$, the content thereof is preferably not more than 30 parts by mass, more preferably not more than 20 parts by mass, further preferably not more than 10 parts by mass based on 100 parts by mass of the rubber component from the viewpoint of reinforceability.

<Other components>

In addition to the above-mentioned components, other compounding components commonly used in the manufacturing of the rubber composition, for example, fillers other than the above-mentioned carbon black (other fillers), zinc oxide, stearic acid, antioxidants, processing aids, waxes, softening agents, vulcanizing agents, vulcanization accelerators and the like can be optionally compounded in the rubber composition for a tread in one embodiment of the present invention.

The above-mentioned other fillers are not limited particularly, and examples thereof include silica, aluminum hydroxide, alumina (aluminum oxide), calcium carbonate, talc and the like. These fillers can be used alone or can be used in combination with two or more kinds thereof.

Silica is not limited particularly, and examples thereof include silica prepared by a dry method (anhydrous silica), silica prepared by a wet method (hydrous silica) and the like. Hydrous silica prepared by a wet method is preferred for the reason that many silanol groups are contained.

A nitrogen adsorption specific surface area ($N_2SA$) of silica is preferably 80 $m^2/g$ or more, more preferably 100 $m^2/g$ or more from the viewpoint of durability and elongation at break. On the other hand, the nitrogen adsorption specific surface area of silica is preferably 250 $m^2/g$ or less, more preferably 220 $m^2/g$ or less from the viewpoint of fuel efficiency and processability. It is noted that herein the nitrogen adsorption specific surface area of silica is a value measured in accordance with ASTM D3037-93.

When the rubber composition comprises silica, the content thereof is preferably not less than 1 part by mass, more preferably not less than 3 parts by mass based on 100 parts by mass of the rubber component from the viewpoint of durability and elongation at break. Further, from the viewpoint of abrasion resistance, the content of silica is preferably not more than 10 parts by mass, more preferably not more than 8 parts by mass, further preferably not more than 6 parts by mass based on 100 parts by mass of the rubber component. It is noted that the content of silica may be 0 part by mass.

Silica is preferably used in combination with a silane coupling agent. The silane coupling agent may be any silane coupling agents conventionally used in conjunction with silica in the rubber industry. Examples of the silane coupling agent include sulfide-based silane coupling agents such as bis(3-triethoxysilylpropyl) disulfide and bis(3-triethoxysilylpropyl) tetrasulfide; mercapto-based silane coupling agents such as 3-mercaptopropyltrimethoxysilane and NXT-Z100, NXT-Z45, NXT and the like manufactured and sold by Momentive Performance Materials (silane coupling agents having a mercapto group); vinyl-based silane coupling agents such as vinyltriethoxysilane; amino-based silane coupling agents such as 3-aminopropyltriethoxysilane; glycidoxy-based silane coupling agents such as $\gamma$-glycidoxypropyltriethoxysilane; nitro-based silane coupling agents such as 3-nitropropyltrimethoxysilane; and chloro-based silane coupling agents such as 3-chloropropyltrimethoxysilane. These silane coupling agents may be used alone or may be used in combination of two or more thereof.

When the rubber composition comprises a silane coupling agent, the content thereof is preferably 1 part by mass or more, more preferably 3 parts by mass or more based on 100 parts by mass of silica for the reason that sufficient effects of improving dispersibility of fillers and decreasing a viscosity can be obtained. On the other hand, the content of the silane coupling agent is preferably 12 parts by mass or less, more preferably 10 parts by mass or less based on 100 parts by mass of silica. When the content of the silane coupling agent exceeds 12 parts by mass, sufficient coupling effect and silica dispersing effect cannot be obtained and the reinforcing property deteriorates.

The antioxidant is not particularly limited, and any antioxidants conventionally used in a field of rubbers can be used. Examples of the antioxidant include quinoline-based antioxidants, quinone-based antioxidants, phenol-based antioxidants, phenylenediamine-based antioxidants and the like.

When the rubber composition comprises the antioxidant, the content thereof is preferably 0.5 part by mass or more, more preferably 0.8 part by mass or more based on 100 parts by mass of the rubber component. On the other

hand, the content of the antioxidant is preferably 2.0 parts by mass or less, more preferably 1.5 parts by mass or less, further preferably 1.2 parts by mass or less based on 100 parts by mass of the rubber component from the viewpoint of dispersibility of the filler and the like, elongation at break and kneading efficiency.

Examples of the processing aid include fatty acid metal salts such as zinc stearate and the like. Specifically there are, for example, fatty acid soap processing aids such as Struktol EF44 and WB16 available from Schill & Seilacher Struktol GmbH. A compounding amount of the processing aid is preferably not less than 0.1 part by mass based on 100 parts by mass of a total amount of rubber components, and is preferably not more than 5 parts by mass, particularly preferably not more than 3 parts by mass.

When the rubber composition comprises the wax, the content thereof is preferably not less than 0.5 part by mass, more preferably not less than 1 part by mass based on 100 parts by mass of the rubber component from the viewpoint of securing weather resistance of a rubber. On the other hand, the content thereof is preferably not more than 10 parts by mass, more preferably not more than 5 parts by mass, from the viewpoint of preventing whitening of a tire due to blooming of the wax on the surface of a tire.

When the rubber composition comprises the stearic acid, the content thereof is preferably not less than 0.2 part by mass, more preferably not less than 1 part by mass based on 100 parts by mass of the rubber component from the viewpoint of obtaining a vulcanization rate On the other hand, the content thereof is preferably not more than 10 parts by mass, more preferably not more than 5 parts by mass, from the viewpoint of processability.

When the rubber composition comprises the zinc oxide, the content thereof is preferably not less than 0.5 part by mass, more preferably not less than 1 part by mass based on 100 parts by mass of the rubber component from the viewpoint of obtaining a vulcanization rate. On the other hand, the content thereof is preferably not more than 10 parts by mass, more preferably not more than 5 parts by mass, from the viewpoint of abrasion resistance.

The softening agent means a component soluble in acetone, and examples thereof include oil such as process oil and vegetable fats and oils, liquid diene polymers and the like. These softening agents may be used alone or may be used in combination of two or more thereof. Among these, oil is preferred.

Examples of oil include a process oil, vegetable fats and oils, or a mixture thereof. Examples of process oil include a paraffin process oil, a naphthenic process oil, an aromatic process oil (aromatic oil) and the like. Examples of vegetable oils and fats include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, tsubaki oil, jojoba oil, macadamia nut oil, tung oil, and the like. Among these, aromatic oil is preferred.

The liquid diene polymer is not limited particularly as long as it is a liquid diene polymer having a weight-average molecular weight of not more than 50,000. Examples thereof include a styrene-butadiene copolymer (rubber), a butadiene polymer (rubber), an isoprene polymer (rubber), an acrylonitrile-butadiene copolymer (rubber) and the like. Among the liquid diene polymers, liquid styrene-butadiene copolymer (liquid styrene-butadiene rubber (liquid SBR)) is preferable for the reason that on-ice performance is good. Further the liquid butadiene polymer (liquid butadiene rubber (liquid BR)) is preferable for the reason that an effect of enhancing abrasion resistance is remarkable.

A weight-average molecular weight (Mw) of the liquid diene polymer is preferably not less than 1,000, more preferably not less than 1,500 for the reason that an effect of enhancing abrasion resistance is satisfactory. On the other hand, the weight-average molecular weight is preferably not more than 50,000, more preferably not more than 20,000, more preferably not more than 15,000 from the viewpoint of on-ice performance. It is noted that herein the weight-average molecular weight (Mw) can be calibrated with standard polystyrene based on measurement values determined with gel permeation chromatography (GPC) (GPC-8000 series manufactured by Tosoh Corporation; detector: differential refractometer; column: TSKGEL SUPERMALTPORE HZ-M manufactured by Tosoh Corporation).

A content of the softening agent is preferably not less than 1 part by mass, more preferably not less than 3 parts by mass based on 100 parts by mass of the rubber component from the viewpoint of processability. On the other hand, the content of the softening agent is preferably not more than 10 parts by mass, more preferably not more than 5 parts by mass from the viewpoint of block crack resistance and abrasion resistance.

Sulfur is suitably used as the vulcanizing agent. Examples of usable sulfur include powdered sulfur, oil-treated sulfur, precipitated sulfur, colloidal sulfur, insoluble sulfur, highly dispersible sulfur and the like.

When sulfur is contained as the vulcanizing agent, the content thereof is preferably 0.5 part by mass or more, more preferably 1.0 part by mass or more based on 100 parts by mass of the rubber component from the viewpoint of securing sufficient vulcanization reaction and obtaining a good grip performance and abrasion resistance. On the other hand, the content thereof is preferably 3.0 parts by mass or less, more preferably 2.5 parts by mass or less based on 100 parts by mass of the rubber component from the viewpoint of degradation.

Examples of vulcanizing agents other than sulfur include a vulcanizing agent containing a sulfur atom such as TACKIROL V200 manufactured by Taoka Chemical Co., Ltd., DURALINK HTS (1,6-hexamethylene-sodium dithiosulfate dehydrate) manufactured by Flexsys, KA9188 (1,6-bis(N,N'-dibenzylthiocarbamoyldithio)hexane) manufactured by LANXESS K.K. and the like, an organic peroxide such as a dicumyl peroxide and the like.

Examples of a vulcanization accelerator include sulfenamide-, thiazole-, thiuram-, thiourea-, guanidine-, dithiocarbamate-, aldehyde amine- or aldehyde ammonia-, imidazoline- and xanthate-based vulcanization accelerators. These vulcanization accelerators may be used alone or may be used in combination of two or more thereof. Among these, sulfenamide-based vulcanization accelerators, thiazole-based vulcanization accelerators and guanidine-based vulcanization accelerators are preferred, and sulfenamide-based vulcanization accelerators are preferred more.

Examples of sulfenamide-based vulcanization accelerators include N-t-butyl-2-benzothiazolylsulfenamide (TBBS), N-cyclohexyl-2-benzothiazolylsulfenamide (CBS), N,N'-dicyclohexyl-2-benzothiazolylsulfenamide (DCBS) and the like. Among these, N-t-butyl-2-benzothiazolylsulfenamide (TBBS) and N-cyclohexyl-2-benzothiazolylsulfenamide (CBS) are preferred.

Examples of the thiazole-based vulcanization accelerator include 2-mercaptobenzothiazole, cyclohexylamine salt of 2-mercaptobenzothiazole, di-2-benzothiazolyl disulfide and the like. Among these, 2-mercaptobenzothiazole is preferable.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine and the like. Among these, 1,3-diphenylguanidine is preferable.

When the rubber composition comprises the vulcanization accelerator, the content thereof is preferably not less than 0.5 part by mass, more preferably not less than 1.0 part by mass based on 100 parts by mass of the rubber component from the viewpoint of securing sufficient vulcanization rate. On the other hand, the content of the vulcanization accelerator is preferably not more than 10 parts by mass, more preferably not more than 5 parts by mass from the viewpoint of inhibiting blooming.

<Preparation of rubber composition and tire>

The rubber composition for a tread according to one embodiment of the present invention can be prepared by a usual method. The rubber composition can be prepared, for example, by a method of kneading the above-mentioned components other than the vulcanizing agent and the vulcanization accelerator with a generally well-known kneading machine used in a rubber industry such as a Banbury mixer, a kneader or an open roll and then adding the vulcanizing agent and the vulcanization accelerator, followed by further kneading and then conducting vulcanization, or by other method.

A tire according to one embodiment of the present invention can be produced by a usual method using the above-mentioned rubber composition for a tread. Namely, the tire can be produced by subjecting an unvulcanized rubber composition obtained by kneading the above-mentioned components, to extrusion processing to a shape of a tire member such as a tread, and then laminating together with other tire members on a tire building machine and forming by a usual forming method, thus forming an unvulcanized tire, and heating and compressing this unvulcanized tire in a vulcanizer.

A category of the tire according to one embodiment of the present invention is not limited particularly, and tires for a passenger car, heavy load tires for trucks, buses and the like, tires for two-wheel vehicles, run flat tires, pneumatic tires, etc. are preferable, and the tire according to one embodiment of the present invention is particularly suitably used as tires for steering of trucks. Further, the tire according to one embodiment of the present invention is good in abrasion resistance and chipping resistance, and therefore, is suitable for running on a rough road surface (unpaved rough road surface).

The present invention will be described based on Examples, but the present invention is not limited thereto only.

A variety of chemicals used in Examples and Comparative Examples will be explained below.

NR: TSR20

SBR1: Non-oil extended solution-polymerized SBR (Mw: 500,000, styrene content: 10% by mass, vinyl content: 40 mol%, cis/trans=0.68) SBR2: Non-oil extended solution-polymerized SBR (Mw: 710,000, styrene content: 23.5% by mass, vinyl content: 20 mol%, cis/trans=0.20)

BR: UBEPOL BR150B (Mw: 440,000, high-cis BR, cis-1,4 bond content: 96%) manufactured by Ube Industries, Ltd.

Carbon black 1: N134 ($N_2SA$: 143 $m^2/g$) manufactured by Tokai Carbon Co., Ltd.

Carbon black 2: SHOBLACK N220 ($N_2SA$: 114 $m^2/g$) manufactured by Cabot Japan K. K.

Silica: ULTRASIL VN3 ($N_2SA$: 175 $m^2/g$, average primary particle size: 15 nm) manufactured by Evonik Degussa

Wax: Ozoace 355 manufactured by NIPPON SEIRO CO., LTD. Antioxidant 1: NOCRAC 6C (N-(1,3-dimethylbutyl)-N'-phenyl-p-phenylenediamine, 6PPD) manufactured by OUCHI SHINKO CHEMICAL INDUSTRIAL CO., LTD. Antioxidant 2: NOCRAC RD (poly(2,2,4-trimethyl-1,2-dihydroquinoline)) manufactured by OUCHI SHINKO CHEMICAL INDUSTRIAL CO., LTD.

Stearic acid: Stearic acid beads "Tsubaki" manufactured by NOF Corporation

Zinc oxide: Zinc Oxide No. 2 manufactured by Mitsui Mining & Smelting Co., Ltd.

Sulfur: Powdered sulfur manufactured by Tsurumi Chemical Industry Co., Ltd.

Vulcanization accelerator: Nocceler NS (N-tert-butyl-2-benzothiazolylsulfeneamide (TBBS)) manufactured by

OUCHI SHINKO CHEMICAL INDUSTRIAL CO., LTD.

Examples and Comparative Examples

According to the compounding formulations shown in Table 1, all chemicals, other than sulfur and a vulcanization accelerator, were kneaded using a 1.7 L sealed Banbury mixer for five minutes up to a discharge temperature of 170°C to obtain a kneaded product. Then, the obtained kneaded product was kneaded again (remilled) at a discharge temperature of 150°C for four minutes by the Banbury mixer. Then, sulfur and a vulcanization accelerator were added to the obtained kneaded product, and kneaded for 4 minutes up to 105°C using a biaxial open roll to obtain an unvulcanized rubber composition. The obtained unvulcanized rubber composition was press-vulcanized at 170°C for 12 minutes to manufacture a test rubber composition.

Further, the obtained unvulcanized rubber composition was extruded and molded into the shape of a tire tread by an extruder equipped with a base having a predetermined shape, and then laminated with other tire members to form an unvulcanized tire, which was then press-vulcanized to manufacture a test tire (12R22.5, a tire for a truck and a bus).

The obtained unvulcanized rubber compositions, vulcanized rubber compositions and test tires were subjected to the following evaluation. Evaluation results are shown in Table 1.

<Viscoelasticity tests>

A complex elastic modulus (70°CE*) and tanδ (70°Ctan8) at 70°C of each of the vulcanized rubber compositions was measured using a viscoelasticity spectrometer VES manufactured by IWAMOTO Quartz GlassLabo Co., Ltd. under the conditions of an initial strain of 10%, a dynamic strain of 2% and a frequency of 10 Hz.

<Abrasion resistance for running on a rough road>

The respective test tires were mounted on all wheels of a truck having a maximum authorized freight mass (2-D vehicle). After running a distance of 30,000 km on an unpaved rough road surface where pebbles were scattered, a groove depth of a tire tread portion was measured. Then, a running distance when the tire groove depth was reduced by 1 mm was measured. The result is indicated by an index, and it shows that the larger the index is, the better the abrasion resistance is. The index was calculated by the following equation.

(Abrasion resistance index) = (Running distance when the tire groove depth of each formulation was reduced by 1 mm) / (Running distance when the tire groove depth of Comparative Example 1 was reduced by 1 mm) × 100

<Elongation at break>

A No.3 dumbbell type test piece was produced from each of the vulcanized rubber composition according to JIS K6251 and was subjected to tensile test. An elongation at break (EB) was measured, and was indicated by an index, assuming that an index of Comparative Example 1 was 100. The larger the EB index is, the better the chipping resistance of the rubber composition is.

Table 1

| | Example | | | | Com. Ex. |
|---|---|---|---|---|---|
| | 1 | 2 | 3 | 4 | 1 |
| Compounding amount (part by mass) | | | | | |
| NR | 60 | 60 | 60 | 60 | 60 |
| SBR 1 | 25 | 40 | 25 | - | 25 |
| SBR 2 | - | - | - | 25 | - |
| BR | 15 | - | 15 | 15 | 15 |

(continued)

| | Example | | | | Com. Ex. |
|---|---|---|---|---|---|
| | 1 | 2 | 3 | 4 | 1 |
| Compounding amount (part by mass) | | | | | |
| Carbon black 1 | 50 | 50 | 50 | 50 | - |
| Carbon black 2 | - | - | - | - | 54 |
| Silica | - | - | 8 | - | 8 |
| Wax | 1.0 | 1.0 | 1.0 | 1.0 | 1.0 |
| Antioxidant 1 | 1.0 | 1.0 | 1.0 | 1.0 | 1.0 |
| Antioxidant 2 | 1.0 | 1.0 | 1.0 | 1.0 | 1.0 |
| Stearic acid | 3.0 | 3.0 | 3.0 | 3.0 | 3.0 |
| Zinc oxide | 3.5 | 3.5 | 3.5 | 3.5 | 3.5 |
| Sulfur | 2.0 | 2.0 | 2.0 | 2.0 | 2.0 |
| Vulcanization accelerator | 2.0 | 2.0 | 2.0 | 2.0 | 2.0 |
| Evaluation | | | | | |
| 70°CE* | 6.5 | 6.2 | 7.5 | 6.0 | 8.0 |
| 70°Ctanδ | 0.10 | 0.13 | 0.10 | 0.13 | 0.09 |
| Abrasion resistance | 111 | 106 | 113 | 109 | 100 |
| EB index | 111 | 111 | 117 | 111 | 100 |

From the results shown in Table 1, it is seen that the tire having a tread composed of the rubber composition for a tread of the present invention comprising a rubber component comprising a predetermined styrene butadiene rubber, isoprene rubber and butadiene rubber is good in abrasion resistance when running on a rough road and has improved overall performances such as abrasion resistance and chipping resistance.

The tire having a tread composed of the rubber composition for a tread of the present invention is good in abrasion resistance, particularly abrasion resistance for running on a rough road.

An object of the present invention is to provide a tire having a tread composed of the rubber composition assuring good abrasion resistance, particularly abrasion resistance for running on a rough road. The rubber composition for a tread comprises 10 to 70 parts by mass of carbon black having a nitrogen adsorption specific surface area of 130 $m^2/g$ or more based on 100 parts by mass of a rubber component comprising 50 to 70% by mass of an isoprene rubber, 10 to 30% by mass of a butadiene rubber and 20 to 40% by mass of a styrene-butadiene rubber.

## Claims

**1.** A rubber composition for a tread comprising:

10 to 70 parts by mass of carbon black having a nitrogen adsorption specific surface area of 130 $m^2/g$ or more based on 100 parts by mass of a rubber component comprising 50 to 70% by mass of an isoprene rubber, 10 to 30% by mass of a butadiene rubber and 22 to 40% by mass of a styrene-butadiene rubber.

**2.** The rubber composition for a tread of claim 1, having 70°CE* of 6.2 or more.

**3.** The rubber composition for a tread of claim 1 or 2, having 70°Ctanδ of 0.13 or less.

**4.** The rubber composition for a tread of any one of claims 1 to 3, wherein a silica content is not less than 0 part by mass and not more than 10 parts by mass.

**5.** The rubber composition for a tread of any one of claims 1 to 4, wherein a styrene content of the styrene-butadiene rubber is from 5 to 15% by mass, a vinyl content thereof is from 30 to 45 mol% and a weight-average molecular weight thereof is not less than 200000.

**6.** The rubber composition for a tire of any one of claims 1 to 5, wherein a cis content of the butadiene rubber is not

less than 90% and a weight-average molecular weight thereof is not less than 400000.

7. A tire having a tread composed of the rubber composition for a tread of any one of claims 1 to 6.

**Patentansprüche**

1. Kautschukzusammensetzung für eine Lauffläche, umfassend:
10 bis 70 Massenteile Ruß mit einer spezifischen Stickstoffadsorptionsoberfläche von 130 $m^2/g$ oder mehr bezogen auf 100 Massenteile einer Kautschukkomponente, die 50 bis 70 Massen-% eines Isoprenkautschuks, 10 bis 30 Massen-% eines Butadienkautschuks und 22 bis 40 Massen-% eines Styrol-Butadien-Kautschuks umfasst.

2. Kautschukzusammensetzung für eine Lauffläche nach Anspruch 1, mit 70°CE* von 6,2 oder mehr.

3. Kautschukzusammensetzung für eine Lauffläche nach Anspruch 1 oder 2, mit 70°Ctan$\delta$ von 0,13 oder weniger.

4. Kautschukzusammensetzung für eine Lauffläche nach einem der Ansprüche 1 bis 3, wobei der Siliciumdioxidgehalt nicht weniger als 0 Massenteile und nicht mehr als 10 Massenteile ist.

5. Kautschukzusammensetzung für eine Lauffläche nach einem der Ansprüche 1 bis 4, wobei der Styrolgehalt des Styrol-Butadien-Kautschuks 5 bis 15 Massen-% beträgt, der Vinylgehalt davon 30 bis 45 Mol-% ist und das gewichtsmittlere Molekulargewicht davon nicht weniger als 200000 ist.

6. Kautschukzusammensetzung für einen Reifen nach einem der Ansprüche 1 bis 5, wobei der cis-Gehalt des Butadienkautschuks nicht weniger als 90% und das gewichtsmittlere Molekulargewicht davon nicht weniger als 400000 ist.

7. Reifen mit einer Lauffläche, die aus der Kautschukzusammensetzung für eine Lauffläche nach einem der Ansprüche 1 bis 6 zusammengesetzt ist.

**Revendications**

1. Composition de caoutchouc pour une bande de roulement, comprenant :

   10 à 70 parties en masse d'un noir de carbone ayant une surface spécifique par adsorption d'azote de 130 $m^2/g$ ou plus
   pour 100 parties en masse d'un composant caoutchouc comprenant 50 à 70 % en masse d'un caoutchouc d'isoprène, 10 à 30 % en masse d'un caoutchouc de butadiène et 22 à 40 % en masse d'un caoutchouc de styrène-butadiène.

2. Composition de caoutchouc pour une bande de roulement selon la revendication 1, ayant une valeur CE* à 70° de 6,2 ou plus.

3. Composition de caoutchouc pour une bande de roulement selon la revendication 1 ou 2, ayant une valeur tan $\delta$ à 70° de 0,13 ou moins.

4. Composition de caoutchouc pour une bande de roulement selon l'une quelconque des revendications 1 à 3, dans laquelle la teneur en silice est non inférieure à 0 partie en masse et non supérieure à 10 parties en masse.

5. Composition de caoutchouc pour une bande de roulement selon l'une quelconque des revendications 1 à 4, dans laquelle la teneur en styrène du caoutchouc de styrène-butadiène est de 5 à 15 % en masse, sa teneur en vinyle est de 30 à 45 % en moles, et sa masse moléculaire moyenne en masse est d'au moins 200 000.

6. Composition de caoutchouc pour une bande de roulement selon l'une quelconque des revendications 1 à 5, dans laquelle la teneur en cis du caoutchouc de butadiène est d'au moins 90 % et sa masse moléculaire moyenne en masse est d'au moins 400 000.

7. Pneu ayant une bande de roulement composée de la composition de caoutchouc pour une bande de roulement de

l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014024890 A
- EP 2730433 A1